# EUROPÄISCHE PATENTSCHRIFT

(11) **EP 1 997 752 B1**
(45) Veröffentlichungstag und Bekanntmachung des Hinweises auf die Patenterteilung: **03.03.2010**
(21) Anmeldenummer: 08008333.0
(22) Anmeldetag: 02.05.2008
(51) Int. Cl.: B65G 65/46, B65G 53/50, B65G 33/14

(54) **Fördervorrichtung**
Conveying device
Dispositif d'acheminement

(30) Priorität: 01.06.2007 DE 202007007794 U
(43) Veröffentlichungstag der Anmeldung: 03.12.2008
(73) Patentinhaber: Nold, Werner, 88045 Friedrichshafen (DE)
(72) Erfinder: Nold, Werner, 88045 Friedrichshafen (DE)
(74) Vertreter: Engelhardt, Volker

(56) Entgegenhaltungen:
- DE-A1- 19 905 313

## Beschreibung

Die Erfindung bezieht sich auf eine Vorrichtung zur dosierten Förderung von schütt- und rieselfähigen Gütern mittels einer in einem Gehäuse angeordneten antreibbaren Förderschnecke, deren Antrieb in Abhängigkeit von der Menge des geförderten Gutes steuerbar ist.

Bei derartigen Fördervorrichtungen wird die Mengenregelung mittels eines Absperrschiebers bewerkstelligt, der der Förderschnecke nachgeschaltet ist und nach Erreichen einer wählbaren Menge des geförderten Gutes, die beispielsweise durch Wiegen bestimmbar ist, in das Gehäuse eingefahren wird. An dem Absperrschieber und dessen Führungen lagern sich aber oftmals Staub und auch das geförderte Gut ab, so dass Störungen, die zu Betriebsunterbrechungen führen können, unumgänglich sind. Vor allem aber ist bei dieser Ausgestaltung von Nachteil, dass mit Hilfe eines Absperrschiebers eine Feindosierung nur bedingt möglich ist, da dieser nicht kurzfristig in die Endstellung zu verfahren ist und die Förderschnecke jedoch einen Nachlauf aufweist. Ein unerwünschtes und unkontrolliertes Nachfließen des geförderten Gutes, durch das die abzugebende Menge ungünstig beeinflusst wird, ist demnach unumgänglich.

Aufgabe der Erfindung ist es daher, die Fördervorrichtung der vorgenannten Art in der Weise auszustatten, dass ein Nachfließen des geförderten Gutes zuverlässig verhindert wird, so dass eine exakte dosierte Abgabe ermöglicht ist. Der Bauaufwand, mittels dem dies ermöglicht wird, soll gering gehalten werden, auch sollen Betriebsstörungen und dadurch bedingte Betriebsunterbrechungen nahezu ausgeschlossen sein. Des Weiteren soll eine Anpassung der Fördervorrichtung an das jeweils geförderte Gut ohne Schwierigkeiten ermöglicht und eine Klumpenbildung verhindert werden.

Gemäß der Erfindung wird dies bei einer Fördervorrichtung der eingangs genannten Gattung dadurch erreicht, dass der Förderschnecke ein Ventilator nachgeschaltet ist der unabhängig von der Förderschnecke in zumindest der deren Förderrichtung entgegen gesetzter Drehrichtung antreibbar ist.

Vorteilhaft ist es hierbei, den Ventilator durch einen vorzugsweise koaxial zu diesem angeordneten Pneumatikmotor anzutreiben.

Der Pneumatikmotor sollte an eine Recheneinheit angeschlossen sein, die mit einer in einem der Förderschnecke zugeordneten Sammelraum eingesetzten Wiegeeinrichtung verbunden ist, und der Pneumatikmotor sollte in Abhängigkeit von den von der Wiegeeinrichtung abgegebenen Signalen entgegen der Förderrichtung der Förderschnecke gesteuert antreibbar sein, wobei der vorzugsweise am Sammelbehälter aufgehängte Pneumatikmotor mittels der Recheneinheit auch gesteuert in Förderrichtung der Förderschnecke antreibbar sein sollte.

Zweckmäßig ist es ferner, den Pneumatikmotor mit einer vorzugsweise mit einem Schalldämpfer versehenen Abluftleitung auszustatten und im Übergangsbereich zwischen dem die Förderschnecke umgebenden Gehäuse und dem Sammelraum anzuordnen.

Anstelle des Pneumatikmotors kann selbstverständlich auch ein andersartiges Antriebsaggregat, z.B. ein Elektro- oder ein Hydraulikmotor, zum Antrieb des Ventilators verwendet werden.

Angezeigt ist es auch, dem Ventilator eine Abweisplatte zuzuordnen, die zwischen diesem und dem Pneumatikmotor, in den Sammelraum ragend, vorzugsweise auswechselbar eingebaut und die an dem Gehäuse der Förderschnecke und/oder einem Abschlussdeckel des Sammelraumes befestigt sein sollte, wobei der Pneumatikmotor die Abweisplatte durchgreift.

Nach einer Weiterbildung ist vorgesehen, zwischen dem Ventilator und der Förderschnecke einen mit dieser trieblich verbundenen Austragstern anzuordnen und die Spaltbreite zwischen dem Ventilator und dem Gehäuse der Förderschnecke im vertikal unteren Bereich und/oder zwischen dem Ventilator und dem Austragstern einstellbar auszubilden.

Wird eine Fördervorrichtung gemäß der Erfindung gestaltet , so ist es möglich, unmittelbar nach Erreichen einer bestimmten geförderten Menge nicht nur die Förderschnecke still zu setzen, sondern auch ein Nachfließen des geförderten Gutes zu verhindern. Wird nämlich der Ventilator entgegen der Drehrichtung der Förderschnecke in Gang gesetzt, so wird das nachfließende Gut durch den entstehenden Luftstrom beaufschlagt und je nach Fördergut auch mechanisch durch den Ventilator in dem Gehäuse der Förderschnecke zurückgehalten, so dass eine sofortige Förderunterbrechung gewährleistet ist. Auf diese Weise ist eine Feindosierung des geförderten Gutes zu bewerkstelligen, denn die in dem Sammelbehälter befindliche Menge wird durch unerwünschte Zugaben nicht beeinflusst.

Der Bauaufwand, mittels dem dies zu erreichen ist, ist gering, da lediglich der Förderschnecke ein vorzugsweise durch einen Luftmotor antreibbarer Ventilator nachzuschalten ist. Ein vielseitiger Einsatz ist somit gegeben, da durch den zweckmäßigerweise in beiden Drehrichtungen antreibbaren Ventilator gegebenenfalls zusammen mit dem Austragsstern einer Klumpenbildung in dem zu fördernden Gut entgegengewirkt wird. Außerdem sind die Drehzahl des Ventilators, dessen Spaltabstände zu den zugeordneten Bauteilen sowie die Abweisplatte an das jeweils geförderte Gut ohne Schwierigkeiten anpassbar, eine sehr vielseitige vorteilhafte Verwendbarkeit der vorschlagsgemäß ausgebildeten Fördervorrichtung ist demnach gegeben.

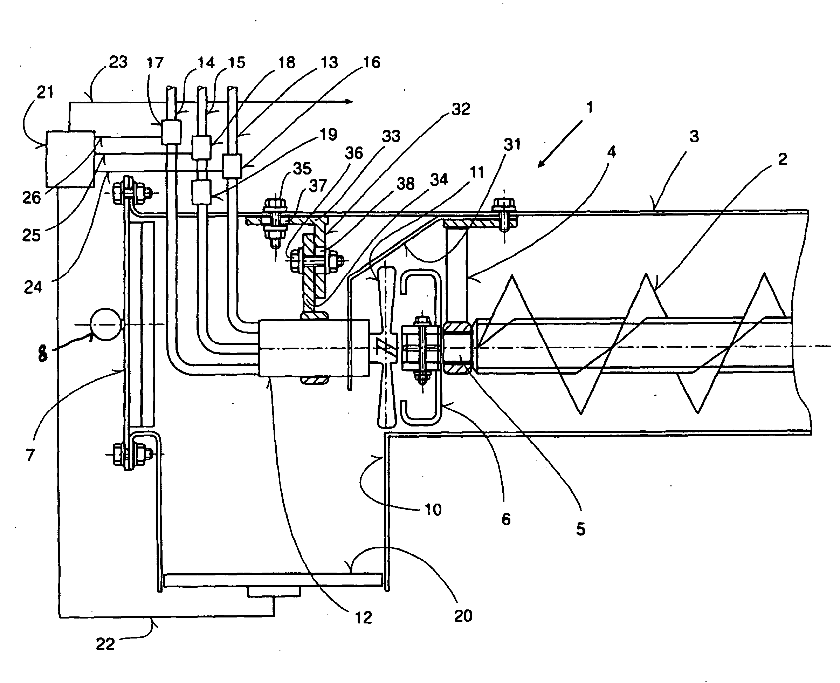

In der Zeichnung ist ein Ausführungsbeispiel einer gemäß der Erfindung ausgebildeten Fördervorrichtung dargestellt, das nachfolgend im Einzelnen erläutert ist.

Die mit 1 bezeichnete Vorrichtung dient zur dosierten Förderung von schütt- und rieselfähigen Gütern und besteht im Wesentlichen aus einer in einem Gehäuse 3 angeordneten antreibbaren Förderschnecke 2, mittels der das zu fördernde Gut aus einem nicht dargestellten Vorratsbehälter in einen Sammelbehälter 10 gefördert wird. Die Welle 5 der Förderschnecke 2 ist hierbei mittels einer Halterung 4 in dem Gehäuse 2 aufgehängt, außerdem ist dieses mit einem Sichtfenster 7 und einem manuell bedienbaren Wischerblatt 8 versehen.

Um eine exakte Dosierung des zu fördernden Gutes bewerkstelligen zu können, ist der Förderschnecke 2 ein Ventilator 11 nachgeschaltet, der durch einen Pneumatikmotor 12 in beiden Drehrichtungen gesondert antreibbar ist. Dazu wird dem Pneumatikmotor 12 über Druckleitungen 13 und 14 Druckluft zugeführt, zur Rückführung der Druckluft ist eine Rückleitung 15, die mit einem Schalldämpfer 19 ausgestattet ist, vorgesehen. Zur gesteuerten Druckluftzufuhr bzw. -rückführung sind in die Druckleitungen 13 und 14 sowie die Rückleitungen 15 jeweils ein Steuerventil 16 und 17 bzw. 18 zur stufenlosen Einstellung der Drehzahl eingesetzt.

Der Fördervorrichtung 1 ist des Weiteren eine Recheneinheit 21 zugeordnet, die über eine Signalleitung 22 mit einer in den Sammelbehälter 10 eingesetzten Wiegeeinrichtung 20 sowie über eine Signalleitung 23 mit dem nicht gezeigten Antriebsmotor der Förderschnecke 2 verbunden ist. Außerdem ist die Recheneinheit 21 über Signalleitungen 24, 25 und 26 an die Steuerventile 16, 17 und 18 angeschlossen.

Der Ventilator 11 ist durch den Pneumatikmotor 12 in beiden Drehrichtungen antreibbar. Wird der Ventilator 11 in der Drehrichtung der Förderschnecke 2 angetrieben, so wird deren Förderleistung unterstützt. Bei einem Antrieb entgegen der Drehrichtung der Förderschnecke 2 wird jedoch deren Förderleistung entgegengewirkt. Die Drehrichtung des Ventilators 11 entgegen der Förderrichtung der Förderschnecke 2 wird gewählt, wenn mittels der Wiegevorrichtung 20 über die Signalleitung 22 ein Signal der Recheneinheit 21 zugeleitet wird, aus dem sich ergibt, dass eine wählbare Menge des geförderten Gutes sich in dem Sammelbehälter 10 befindet. In diesem Betriebszustand wird über die Recheneinheit 21 zwar der Antriebsmotor der Förderschnecke 2 stillgesetzt, die Förderschnecke 2 weist aber in Abhängigkeit von dem geförderten Gut einen mehr oder weiniger großen Nachlauf auf, so dass die in dem Sammelbehälter 10 befindliche Menge überschritten würde. Durch den Ventilator 11 wird aber zuverlässig ein Nachlauf verhindert, denn durch den Ventilator 11, der bei einem Abschalten der Förderschnecke 2 entgegengesetzt zu deren Drehrichtung angetrieben wird, wird ein eventueller Nachlauf unterbunden.

Zwischen der Förderschnecke 2 und dem Ventilator 11 ist ein Austragsstern 6 angeordnet, der zusammen mit der Förderschnecke 3 angetrieben wird und verhindert, dass sich in dem geförderten Gut Verdickungen bilden. Des Weiteren ist dem Ventilator 11 eine Abweisplatte 31 zugeordnet, durch die das geförderte Gut in den Sammelbehälter 10 geleitet wird.

Der Pneumatikmotor 12 und mit diesem ist der Ventilator 11 mittels einer verstellbaren Halterung 32 an dem Gehäuse 2 aufgehängt. Die Halterung 32 besteht hierbei aus einem Winkelstück 33 und einem Träger 34, die mittels einer Schraube 36 miteinander verbunden sind. Da die Schraube 36 ein in das Winkelstück 33 eingearbeitetes Langloch 38 wie auch eine Schraube 35, mit der das Winkelstück 33 an dem Gehäuse 2 befestigt ist, ein Langloch 37 durchgreifen, kann der Pneumatikmotor 11 sowohl in der Höhe als auch in Achsrichtung verstellt werden. Dadurch können der Spalt zwischen dem Gehäuse 3 und dem Ventilator 11 wie auch der Abstand zwischen dem Ventilator 11 und dem Austragsstern 6 eingestellt werden, so dass leicht Anpassungen an das jeweils geförderte Gut vorzunehmen sind.

Mit Hilfe des Ventilators 11 ist es somit, trotz des durch die Förderschnecke 2 durch deren Nachlauf bedingter Unwägbarkeiten möglich, eine Förderung sofort zu unterbinden, so dass eine exakte Dosierung des geförderten Gutes zu bewerkstelligen ist.

## Patentansprüche

1. Vorrichtung (1) zur dosierten Förderung von schütt- und rieselfähigen Gütern mittels einer in einem Gehäuse (3) angeordneten antreibbaren Förderschnecke (2), deren Antrieb in Abhängigkeit von der Menge des geförderten Gutes steuerbar ist,
**dadurch gekennzeichnet,**
**dass** der Förderschnecke (2) ein Ventilator (11) nachgeschaltet ist, der unabhängig von der Förderschnecke (2) in zumindest der deren Förderrichtung entgegengesetzter Drehrichtung antreibbar ist.

2. Förder-Vorrichtung nach Anspruch 1,
**dadurch gekennzeichnet,**
**dass** der Ventilator (11) durch einen vorzugsweise koaxial zu diesem angeordneten Pneumatikmotor (12) antreibbar ist.

3. Förder-Vorrichtung nach Anspruch 2,
**dadurch gekennzeichnet,**
**dass** der Pneumatikmotor (12) an eine Recheneinheit(21) angeschlossen ist, die mit einer in einem der Förderschnecke (2) zugeordneten Sammelraum (10) angeordneten Wiegeeinrichtung (20) verbunden ist, und dass der Pneumatikmotor (12) in Abhängigkeit von den von der Wiegeeinrichtung (20) abgegebenen Signalen entgegen der Förderrichtung der Förderschnecke (2) gesteuert antreibbar ist.

4. Förder-Vorrichtung nach Anspruch 2 oder 3,
**dadurch gekennzeichnet,**
**dass** der vorzugsweise am Gehäuse (3) der Förderschnecke (2) aufgehängte Pneumatikmotor (12) mittels der Recheneinheit (21) zusätzlich gesteuert in Förderrichtung der Förderschnecke (2) antreibbar ist.

5. Förder-Vorrichtung nach einem oder mehreren
der Ansprüche 2 bis 4,
**dadurch gekennzeichnet,**
**dass** der Pneumatikmotor (12) mit einer vorzugsweise mit einem Schalldämpfer (19) versehenen Abluftleitung (15) versehen ist.

6. Förder-Vorrichtung nach einem oder mehreren
der Ansprüche 1 bis 5
**dadurch gekennzeichnet,**
**dass** der Ventilator (11) im Übergangsbereich zwischen dem die Förderschnecke (2) umgebenden Gehäuse (3) und dem Sammelraum (10) angeordnet ist.

7. Förder-Vorrichtung nach einem oder mehreren
der Ansprüche 1 bis 6,
**dadurch gekennzeichnet,**
**dass** dem Ventilator (11) eine Abweisplatte (31) zugeordnet ist, die zwischen diesem und dem Pneumatikmotor (12), in den Sammelraum (10) ragend, vorzugsweise auswechselbar, eingesetzt ist.

8. Förder-Vorrichtung nach Anspruch 7,
**dadurch gekennzeichnet,**
**dass** die Abweisplatte (31) an dem Gehäuse (3) der Förderschnecke (2) und/oder einem Abschlussdeckel des Sammelraumes(10) befestigt ist und dass der Pneumatikmotor (12) die Abweisplatte (31) durchgreift.

9. Förder-Vorrichtung nach einem oder mehreren
der Ansprüche 1 bis 8,
**dadurch gekennzeichnet,**
**dass** zwischen dem Ventilator (11) und der Förderschnecke (2) ein mit dieser trieblich verbundener Austragstem (6) angeordnet ist.

10. Vorrichtung nach Anspruch 9,
**dadurch gekennzeichnet,**
**dass** die Spaltbreiten zwischen dem Ventilator (11) und dem Gehäuse (3) der Förderschnecke (2) im vertikal unteren Bereich und/oder zwischen dem Ventilator (11) und dem Austragstern (6) einstellbar sind.

## Claims

1. A device (1) for the metered conveying of bulk and free-flow material by means of a drivable feed auger (2) arranged in a housing (3), the drive of which can be controlled according to the quantity of material being conveyed,
**characterised in that**,
the feed auger (2) is followed by a fan (11) that can be driven at least in the direction of rotation opposite to that of the feed auger (2), independent from the feed auger (2).

2. The conveying device in accordance with Claim 1,
**characterised in that,**
the fan (11) can be driven by a pneumatic motor (12) arranged, in a preferred embodiment, coaxially with the fan (11).

3. The conveying device in accordance with Claim 2,
**characterised in that,**
the pneumatic motor (12) is connected to a tine unit (21) that is connected to a weighing device (20) arranged in a collective space (10) allocated to the feed auger (2), and that the pneumatic motor (12) can be driven opposite to the feed direction of the feed auger (2) subject to open-loop control according to the signals given off by the weighing device (20).

4. The conveying device in accordance with Claim 2 or 3,
**characterised in that,**
the pneumatic motor, which in a preferred embodiment is suspended on the housing (3) of the feed auger (2), can be additionally driven by means of the tine unit (21) in the feed direction of the feed auger (2) subject to open-loop control.

5. The conveying device in accordance with one or more of Claims 2 to 4,
**characterised in that,**
the pneumatic motor (12) is provided with an exhaust air line (15) provided, in a preferred embodiment, with a muffler (19).

6. The conveying device in accordance with one or more of Claims 1 to 5,
**characterised in that,**
the fan (11) is arranged in the transitional area between the housing (3) surrounding the feed auger (2) and the collective space (10).

7. The conveying device in accordance with one or more of Claims 1 to 6,
**characterised in that,**
a deflector plate (31) is assigned to the fan (11) and this deflector plate (31) is arranged in between the fan (11) and the pneumatic motor (12), projecting into the collective space (10) and configured, in a preferred embodiment, to be exchangeable.

8. The conveying device in accordance with Claim 7,
**characterised in that,**
the deflector plate (31) is attached to the housing (3) of the feed auger (2) and/or a closing cover of the collecting space (10) and that the pneumatic motor (12) passes through the deflector plate (31).

9. The conveying device in accordance with one of the aforementioned claims,
**characterised in that,**
an outfeed star (6) connected to the feed auger (2) in a driven connection is arranged between the fan (11) and the feed auger (2).

10. The conveying device in accordance Claim 9,
**characterised in that,**
the gap widths between the fan (11) and the housing (3) of the feed auger (2) can be adjusted in the vertical area at the bottom and/or between the fan (11) and the outfeed star (6).

## Revendications

1. Dispositif (1) pour l'acheminement dosé de matériel versé ou ruisselé, moyennant une vis transporteuse (2) logée dans un boîtier (3) dont l'entraînement se laisse ajuster à la quantité de matériel transporté,
**caractérisé en ce que**
la vis transporteuse (2) est suivie par un ventilateur (11) qui; indépendamment de la vis transporteuse (2), se laisse entraîner au moins dans le sens opposé au sens d'acheminement de la vis.

2. Dispositif d'acheminement d'après la revendication 1,
**caractérisé en ce que**
le ventilateur (11) se laisse entraîner par un moteur pneumatique (12) disposé de préférence dans le sens coaxial par rapport au ventilateur.

3. Dispositif d'acheminement d'après la revendication 2,
**caractérisé en ce que**
le moteur pneumatique (12) est raccordé à une unité de calcul (21) liée à un dispositif de pesée (20) prévu dans une chambre collectrice (10) assignée à la vis transporteuse (2) et que, en dépendance des signaux issus par le dispositif de pesée (20), le moteur pneumatique (12) se laisse entraîner dans le sens d'acheminement opposé à celui de la vis transporteuse (2).

4. Dispositif d'acheminement d'après les revendications 2 ou 3,
**caractérisé en ce que**
moyennant l'unité de calcul (21), le moteur pneumatique (12) suspendu de préférence sur le boîtier (3) de vis transporteuse (2) se laisse entraîner de plus dans le sens d'acheminement de la vis transporteuse (2).

5. Dispositif d'acheminement d'après une ou plusieurs des revendications 2 à 4,
**caractérisé en ce que**
le moteur pneumatique (12) est équipé d'une conduite d'évacuation d'air (15) munie de préférence d'un damper (19).

6. Dispositif d'acheminement d'après une ou plusieurs des revendications 1 à 5,
**caractérisé en ce que**
le ventilateur (11) est arrangé dans l'endroit intermédiaire entre le carter (3) entourant la vis transporteuse (2) et la chambre collectrice (10).

7. Dispositif d'acheminement d'après une ou plusieurs des revendications 1 à 6,
**caractérisé en ce**
**qu'**au ventilateur (11), il est assigné une plaque de renvoi (31) de préférence échangeable, montée entre celui-ci et le moteur pneumatique (12) de sorte qu'elle se dresse dans la chambre collectrice (10).

8. Dispositif d'acheminement d'après la revendication 7,
**caractérisé en ce que**
la plaque de renvoi (31) est fixée sur le boîtier (3) de la vis transporteuse (2) et/ou sur un couvercle de la chambre collectrice (10) et que le moteur pneumatique (12) passe à travers la plaque de renvoi (31).

9. Dispositif d'acheminement d'après une ou plusieurs des revendications 1 à 8,
**caractérisé en ce que**
entre le ventilateur (11) et la vis transporteuse (2), il est disposé une étoile d'expulsion (6) liée par entraînement à celle-ci.

10. Dispositif d'acheminement d'après la revendication 9,
**caractérisé en ce que**
les largeurs d'interstice entre le ventilateur (11) et le boîtier (3) de la vis transporteuse (2) se laissent régler à l'endroit vertical inférieur et/ou entre le ventilateur (11) et l'étoile d'expulsion (6).
